# EUROPEAN PATENT APPLICATION

(11) **EP 2 878 482 A2**
(43) Date of publication of application: **03.06.2015**
(21) Application number: 14466005.7
(22) Date of filing: 05.02.2014
(51) Int. Cl.: B60N 2/14, B60N 2/24

(54) **Universal transport electric platform with electric drives in the wheel hubs equipped with automated system of the side seat tilting**

(30) Priority: 27.03.2013 CZ 20130227
(71) Applicant: Moravsky Vyzkum, s.r.o., 70200 Ostrava-Moravska Ostrava (CZ); Haladova, Petra, 73937 Horni Bludovice (CZ)
(72) Inventor: Haladová, Petra, 739 37 Horní Bludovice (CZ); Polák, Daniel, 713 00 Ostrava-Hermanice (CZ)

(57) **Abstract**

The universal transport electric platform **(25)** with the electric drives in the wheel hubs consists of a frame **(4)** of the transport electric platform and there are firmly attached to it at least two systems **(1)** of wheel suspensions with the electric motor in the hubs and there are also attached the modules **(26)** of servo amplifiers, battery module **(27),** module **(28)** of the superior control system, charging module **(29)** and power module **(30)** and is equipped with the automated system **(42)** of side seat tilting and utility extension, consisting of a telescopic base **(54)** with drives, the first arm **(55),** second arm **(56)** and seat frame **(57).**

The advantage of the universal transport electric platform with the automated system of side seat tilting is structurally simpler wheel suspension (lower price even thanks to the lower number of the drives for direction steering), bigger variability of the overall sizes and thus the options for use and the unique mechanism of seat manipulation, variability even for handicapped persons.

Also the built-in the automated system of side seat tilting with the advantage of the outside entry brings with it a remarkable combination of known principles from the area of robotics and mechanics of transmissions for new application characteristic in its simplicity and minimum number of drives.

## Description

### The Technology Area

The invention relates to the design of small town or off-road electric cars for universal use.

### Current State of the Technology

Currently, there are single-purpose town electric cars on the market, mostly of Asian provenience. They are made in a manner that is fully in harmony with the established manufacturing technology in the automotive industry that is adapted for large series. Up until now no sufficient initiative has been devoted to the area of research and development of an electric platform made of a modular system, allowing - using a combination of modular blocks - assemble a wide spectrum of purpose-built electric cars, electric cars for personal transport and at the same time purpose-built electric platforms utilizable in intra-operational production systems. Even though currently there are development prototypes of purpose-built electric cars, they lack the distinct advantages of the wheel units with electric drives located right in their hubs. Or with this application, but without the advantages of progressive design features used in the proposed solution, without the advantages of the proposed modular system. And without the advantages of the special system of side seat tilting that allow for a trouble-free entry of passengers, especially into a confined space of a small electric car.

Probably the closest to the proposed solution, in an effort to build a modular system of electric platform, aiming to streamline the transportation in large cities and using drives in the wheel hubs of the wheel units, is the European project HOST (The Human Oriented Sustainable Transport). The result is an electric platform with a hybrid drive that can be used for four basic types of extensions for different purposes (passenger car for five passengers, car for nine passengers - taxi, truck for taking supplies to the cities, truck for municipal waste collection). The platform drive is hybrid (small combustion engine plus generator that is used for charging the accumulator). The technology of the accumulators used is outdated (Ni-Mh), a super capacitor is used to cover load peaks. There is an electric motor with the output of 16.5 kW in each wheel (the total output is then 66 kW), all wheels are independently suspended and separately revolving around vertical axis up to the angle of 90°. The advantage of this solution is the possibility to ride directly side-ways or circumvolution on the spot. The wheel suspension is very complicated from the structural point of view. As part of the HOST project some other possibilities of the source subsystems were explored. The result is an energy converter named FPEC (Free-Piston Energy Converter) that acquires the electric energy from the linearly moving generator on whose both ends there are counter-running pistons of the combustion engine. The research and development of this universal electric platform has not been finalized to the point of real prototype. The complex solution of this electric platform does not demonstrate the system of advantages of the proposed solution, the modularity system is solved with a complicated mechanics, without the advantages of professional and progressive solution of electric drives in the wheel hubs.

The proposed solution is also close to the existing electric car Hiriko EV originated in the Massachusetts Institute of Technology in Boston (USA). The production is to be done in Spain and the project is supported both by the Spanish government and European Union. It is a two-seat electric car that is driven by four electric motors in the wheel hubs. Moreover, each wheel is separately controlled by four drives which allows for a good manoeuvrability in narrow streets and as well as trouble-free parking. An excellent feature of Hirika is the ability to change the length of the vehicle. While driving, the length of the electric car is 2,438 mm, however, when parking, it is shortened down to 1,524 mm by straightening the cabin and moving the rear part towards the front axle. A big disadvantage of the Hiriko EV project is entering from the front, back to the seat, from the front of the electric car. Entering to the pair of seats is a breakneck even though the seats can be moved forward. Another disadvantage, resulting from the front entry to the cabin, is the impossibility to use standard controls (especially the steering wheel). Hiriko EV is not a part of any modular system, up to now it is a single-purpose solution, developed only for the urban environment. It is downright unsuitable for driving even in a lighter terrain.

A similar project like Hiriko is a third generation of a car for big cities from NISSAN named Pivo 3. It is designed for the transportation of up to three persons beside each other (with the driver in the middle, slightly more forward). Pivo 3 keeps a classical concept of a body with side sliding doors. It is driven also by electric motors in the wheel hubs. Until now, this concept is not in serial production. However, it is a purely town vehicle unsuitable for driving even in a lighter terrain.

Unlike the proposed concept, NISSAN Pivo 3 is not designed as modular system that would create a universal mobile base for a wide spectrum of variants. Its wheel units, with the electric drives in the hubs, do not allow for its universal use outside of a typical urban traffic. Getting into its confined space is downright problematic, not appropriate for an older generation.

Otto Bock company developed a hybrid off-road car SuperFour for wheelchair bound persons. It is a single-purpose vehicle and its final form was introduced in 2007. The advantages are small size (length 1,980, width 1,100 and height 1,750 mm) and hybrid drive - although the combustion engine produces emissions, it extends the range for one fuelling. Superfour is equipped with turning of all wheels even in small angles which secures a good manoeuvrability.

Unlike the proposed solution, there is the disadvantage of this vehicle the need to keep a bigger part of the classical mechanics of the chassis used for the wheelchairs. The electric drives are not used right in the wheel hubs. A substantial disadvantage is a difficult entry from the front (although the driver's seat is equipped with a mechanism the slides the seat forward). This also makes impossible to use some controls for steering, such as a steering wheel. SuperFour is controlled exclusively via a small panel with a joystick in the forearm rest of the seat. This system is suitable only for slow ride, with the speed limit up to 15 km/h. The high price is also a disadvantage - EUR 36,000.

All in all it can be said that current solution available on the market for persons with reduce mobility are designed on the basis of standardly produced cars and largely all construction and technical parameters of these solutions are subordinated to it.

Autoadapt company currently offers a number of mechanisms for entry of wheelchair bound persons into adapted cars. There are mechanisms available on the market, that allow turning the seat from the car, fully extend it outside and lower it to the required height against the surrounding terrain.

These developed mechanisms, adapted for the modified cars with the side seat tilting, have against the proposed solution disadvantages of complicated construction features of the manipulation mechanisms. They always use at least three drives. The mechanisms usually demonstrate interrupted motion during the manipulation process. Another frequent disadvantage of these manipulation mechanisms is the deficiency of their stationarity and enormous springing when loaded. The chosen kinematics is strongly dependent on the given structure and the spatial dispositions of the common cars into which these mechanisms are adapted.

In view of the purpose that they were developed for all of these mechanisms have the following in common:
- they are one-sided (they can tilt the seat onto one or the other side)
- if they are with the height setting, they have minimally 3 drives
- their motion is not smooth but choppy
- their structure is not rigid enough
- the chosen kinematics stems from the structure and spatial dispositions of common cars

### The Essence of the Invention

The above mentioned disadvantages to a large degree removes the universal transport electric platform with electric drives in the wheel hubs equipped with automated system of the side seat tilting that consists of a frame of the transport electric platform and there are firmly attached to it at least two systems of wheel suspensions with the electric motor in the hubs and there are also attached the modules of servo amplifiers, battery module, module of the superior control system, charging module and power module and that is equipped with the automated system of side seat tilting with the advantage of the outside entry and utility extension whose substance is in that the system of wheel suspension with the electric motor in the hubs consists of a trapezoid wheel suspension, compact wheel unit for small electric cars, frame of a transport electric platform, mechanism of torsion stabilizer and furthermore a mechanism of steering, while the trapezoid wheel suspension consists of pitman, upper arm, lower arm, springing unit and trapezoid wheel suspension interface,
while the upper arm is connected with the pitman in the upper ball pin and with the trapezoid wheel suspension interface in the upper pin, while the lower arm is connected with the pitman in the lower ball pin and with the trapezoid wheel suspension interface in the lower pin,
while using the trapezoid wheel suspension interface the whole of trapezoid wheel suspension with the compact wheel unit for small electric cars is firmly connected with the frame of the transport electric platform,
while the mechanism of torsion stabilizer consists of torsion stabilizer laid in the frame of the transport electric platform and a pair of the stabilizer arms anchored in the lower arms,
while the mechanism of steering consists of a steering box with moving element of the steering box, electric drive of the steering box and a system of connecting racks that through the head of the rack tie on the pitman, while the steering box is firmly connected with the frame of the transport electric platform.

The above mentioned disadvantages are to a large degree removed further by an automated system of side seat tilting with the advantage of the outside entry that consists of a telescopic base with drives, the first arm, second arm and seat frame and the substance is that the telescopic base with the drives consists of an immobile part of the telescopic base with the drives and a movable part of the telescopic base with the drives, while the immobile part of the telescopic base with the drives consists of a profile of immobile part of the telescopic base with the drives and to it there is attached the drive of a vertical motion, followed by a satellite of immobile part of the telescopic base with the drives revolvingly connected with the satellite bearing with the profile of immobile part of the telescopic base with the drives, while the movable part of the telescopic base with the drives consists of a profile of movable part of the telescopic base with the drives, equipped with the features of the telescopic conduit, drive of a horizontal motion and bearing of the first arm,
while the first arm consists of the first arm body and in it there is the bearing of the second arm, pin of the first arm with the drive pulley of the second belt drive and tensioning mechanism of the belt drive, while the pin of the first arm with the drive pulley of the second belt drive consists of the pin of the first arm and the drive pulley of the second belt drive that is firmly connected with the pin of the first arm,
while the second arm consists of the body of the second arm in which there is the bearing of the seat frame, of the hollow pin of the second arm with the driven pulley of the first belt drive and tensioning mechanism of the belt drive, while the hollow pin of the second arm with the driven pulley of the first belt drive consists of the hollow pin of the second arm on which there is firmly attached the driven pulley of the first belt drive and the supporting bearing, while the seat frame consists of the structure of the seat frame to which it is firmly attached the pin of the seat frame onto which it is attached the driven pulley of the second belt drive, while inside the first arm of the automated system of side seat tilting with the advantage of the outside entry there is the first belt drive consisting of the belt of the first belt drive, profile of movable part of the telescopic base with the drives and driven pulley of the first belt drive where inside the second arm of the automated system of side seat tilting with the advantage of the outside entry there is the second belt drive consisting of the belt of the second belt drive, drive pulley of the second belt drive and driven pulley of the second belt drive.

Furthermore, it is advantageous that the damper is together with the spring part of the springing unit.

Furthermore, it is advantageous that on the frame there is the transport electric platform equipped with the anchoring points of the extension for attaching different sorts of extensions

Furthermore, it is advantageous when the tensioning mechanism of the belt drive is the mechanism of tension pulley consisting of the tension pulley with a bearing, line of the tension pulley, spring of the tension pulley and tendon bolt of the tension pulley,

Furthermore, it is advantageous when the extension is a two-seat extension with the cargo space consisting of the cabin space for the crew, cargo space, extension frame, parts of the body, glassed-in cabin space, doors and photovoltaic roof panel

Furthermore, it is advantageous when the extension is a one-seat off-road extension consisting of the frame, extension, parts of the body, glassed-in cabin space, doors and photovoltaic roof panel while from the outside the one-seat off-road extension is equipped for driving off roads with off-road bumpers and off-road mudguards.

Furthermore, it is advantageous when the extension is a six-wheel two-seat extension with the cargo space.

Furthermore, it is advantageous when the universal transport electric platform is equipped with a dashboard with multi-functional display with a touch screen, telescopically extensible control module, pedal module and seats, attached onto the automated system of side seat tilting with the advantage of the outside entry,

Furthermore, it is advantageous when the telescopically extensible control module **(39)** consists of a steering wheel **(43),** traffic indicator lever and the instrument shield **(44)** with the speedometer **(45),** left display **(46)** and right display **(47),** while the pedal module **(40)** consists of a brake pedal **(48)** and accelerator pedal **(49).**

The advantage of the proposed universal transport electric platform with the automated system of side seat tilting is a structurally simpler wheel suspension (lower price even thanks to a lower number of the dives for direction control), higher variability of the overall dimension and thus also the possibilities of use, using supportive power systems like photovoltaic, unique mechanisms for seat manipulation, variability even for the handicapped persons.

Also the built-in the automated system of side seat tilting with the advantage of the outside entry brings with it a remarkable combination of known principles from the area of robotics and mechanics of transmissions for new application characteristic in its simplicity and minimum number of drives. In essence the structure of the mechanism should be completely maintenance-free. The kinematics of the mechanism motion is also interested from the point of view of the necessary working space.

Among the advantages of the solution there are also minimum number of drives while achieving the required kinematics of the mechanism, symmetric kinematics of motion with the option of tilting to both sides which is an ideal solution for one-seat vehicles, smoothness or flowingness and the motion elegance, the option of a robust structure promising a high rigidity of the mechanism (principle of SCARA robots) and also an elegant design.

A summary of advantages of the proposed solution in comparison with the current systems of electric cars and electric platforms that are mostly still in the development stage and are not in series production:
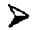 The proposed modular solution of electric platform allows for a mass-production of component module blocks that can then be used to build, in a prefabricated manner, a wide range of alternatives of means of transportation with the electric drives with minimum costs.
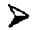 The structural solution of mechanics, electronics and electric drives right in the wheel hubs that form a complete wheel unit is much more progressive in design, production and economics in comparison with the current solutions.
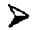 The suggested concept of the electric platform allows for combinations of a wide spectrum of purpose-built extensions, especially for municipal purposes, alternatives of extensions of passenger transport including the transport of the disabled persons and alternatives of extensions for the sports purposes.
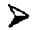 The electric platform, equipped with a control system, can be used as a robotic means of transportation for intra-operation transport as part of the production processes.
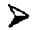 The electric platform is a combination of suitable modules with the corresponding extension and special equipment, usable as a remotely controlled inspection, rescue and emergency robot for special purposes.
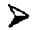 A new construction system of side seat tilting is timeless, very well suited for getting in a confined space of a small car. The tilting process is controlled from the seat rest. The tilting motion is synchronized with the continual backward motion of the seat in order to improve the spatial conditions for the feet of the passengers that - during the tilting motion - move under the car dashboard and near the steering wheel.
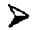 Special power sub-system with a high accumulative electric power capacity enables long range. The power system is equipped with a small monoblock of a safety combustion engine and electric generator (range extender) for cases of unavailability of charging.
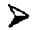 Unlike the hybrid vehicles or cars with electric drives that are not located right in the wheel hubs, the proposed solution enables complex electronic control of the individual wheel units. Using the proposed electric drives eliminates the classic features of motor vehicles, motor unit, transmission and axle drive. Using the direct electric drive for turning and controlling the wheels eliminates the classic gear system of steering.
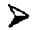 Using a special wheel suspension on the basic frame of the electric platform ensures a large height range of motion of the individual wheels, thus ensuring a full traction of all wheels even in a very rough terrain with large height differences.
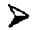 The suggested electric platform, in relatively reduced sizes, is universally usable as a means of transport for medical purposes, in the emergency systems for patients in trauma condition or as a robotic platform with a remote or memory partially autonomous control of the robotic process.
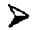 The proposed electric platform in an alternative version of robotic transporter can be used for the automated tow processes of small airplanes, based on the design of the Czech company Evektor. A pilot from the plane cabin remotely controls the electric platform in the version of tow transporter without a driver. The plane is then towed to the runway, using the remote control the pilot unfastens the tow feature and guides the transporter back to its base. When landing the same process can be repeated, the pilot and his plane are towed back to hangar.

### Overview of Figures on the Drawings

The attached sheets contain figures and legend.

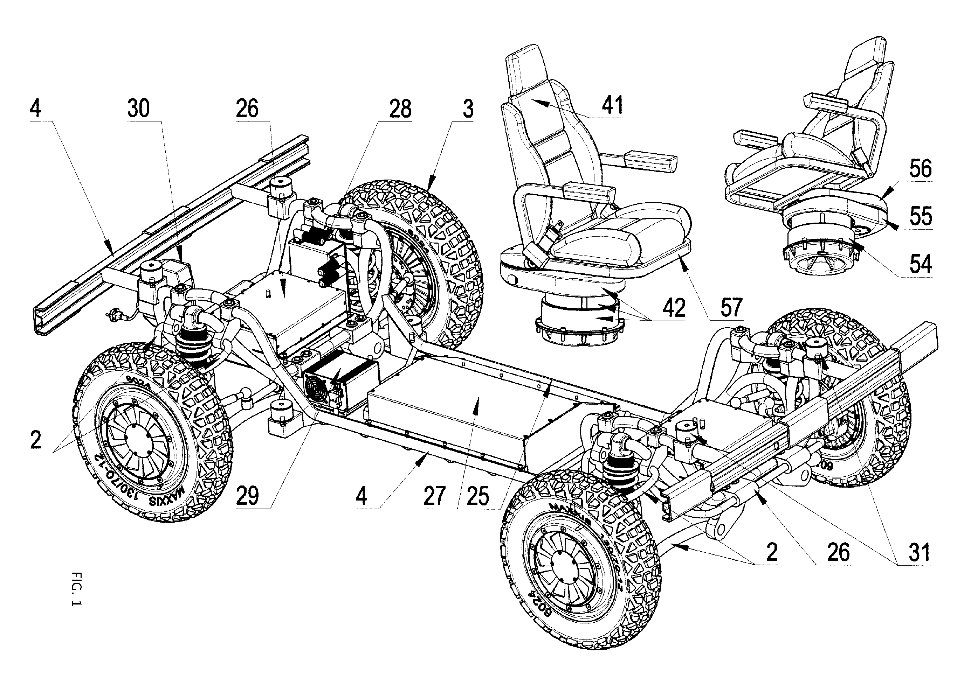

The figure for annotation shows the axonometric view of the universal transport electric platform and a view of the automated system of side seat tilting with the advantage of the outside entry
- FIG. 1: axonometric view of the universal transport electric platform and view of the automated system of side seat tilting with the advantage of the outside entry

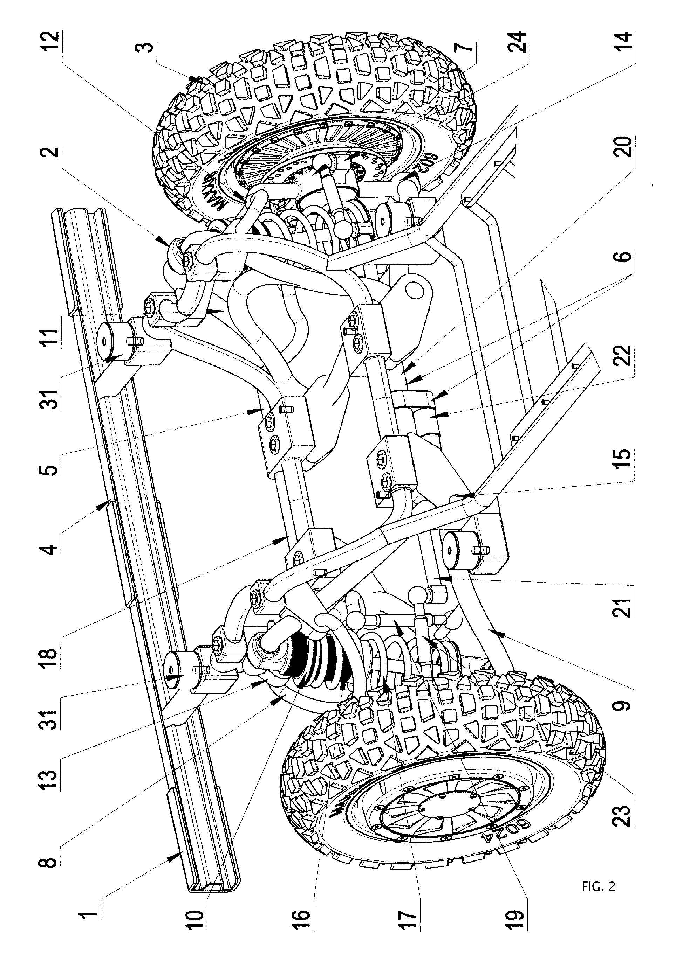

- FIG. 2: axonometric view of the wheel suspension system with an electric motor in the hubs

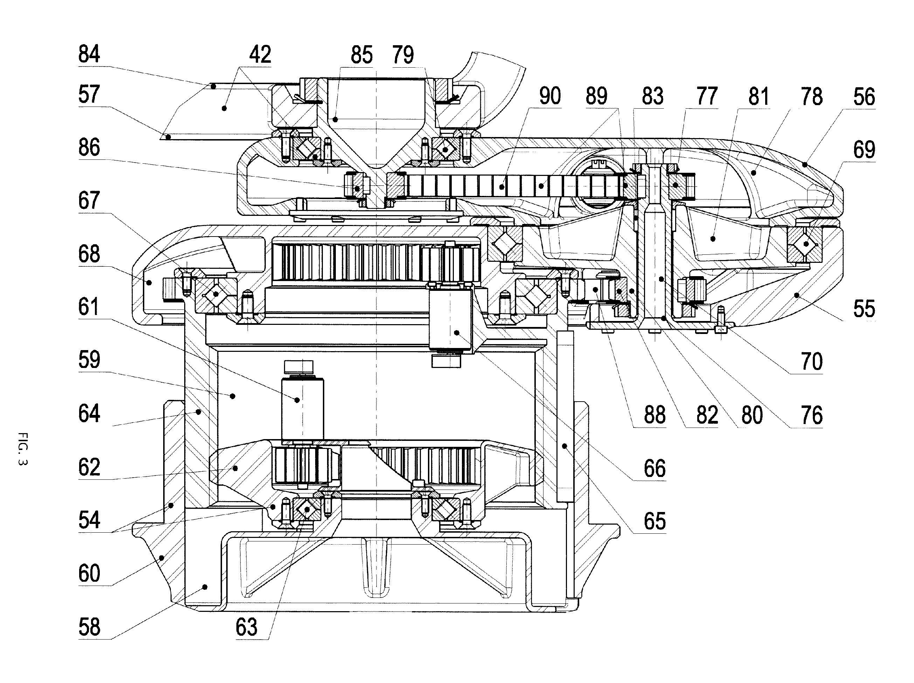

- FIG. 3: section of the automated system of side seat tilting with the advantage of the outside entry
- FIG. 4: section of the belt drives of the automated system of side seat tilting

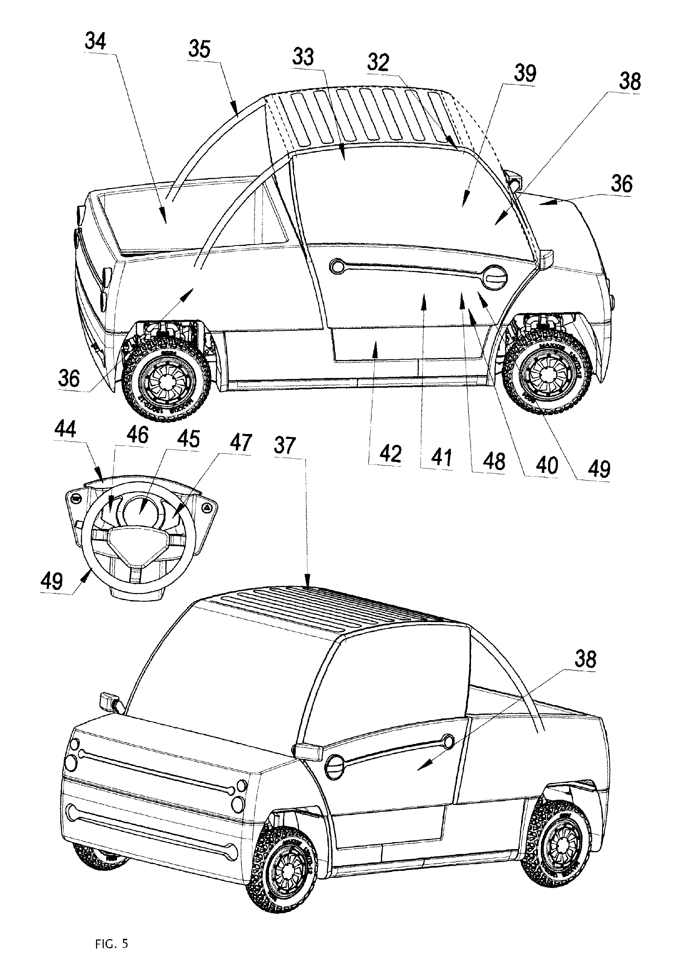

- FIG. 5: overall axonometric view of two-seat off-road extension and detail of telescopically extensible control module
- FIG. 6: overall axonometric view of one-seat extension with cargo space
- FIG. 7: overall axonometric view of six-wheel two-seat extension with cargo space

### An example of the invention variant

The universal transport electric platform **25** consists of a frame **4** of the transport electric platform and there are firmly attached to it at least two systems **1** of wheel suspensions with the electric motor in the hubs and there are also attached the modules **26** of servo amplifiers, battery module **27,** module **28** of the superior control system, charging module **29** and power module **30** and that is equipped with the automated system **42** of side seat tilting with the advantage of the outside entry. It is possible to attach onto the universal transport electric platform **25** different types of extensions using eight anchoring points **31** of extension located on the frame **4** of the transport electric platform.

The system **1** of wheel suspension with the electric motor in the hubs consists of a trapezoid wheel suspension **2,** compact wheel unit **3** for small electric cars, frame **4** of a transport electric platform, mechanism **5** of torsion stabilizer and furthermore a mechanism **6** of steering, while the trapezoid wheel suspension **2** consists of pitman **7,** upper arm **8,** lower arm **9,** springing unit **10** and trapezoid wheel suspension interface **11**.

The upper arm **8** is connected with the pitman **7** in the upper ball pin **12** and with the trapezoid wheel suspension interface **11** in the upper pin **13,** while the lower arm **9** is connected with the pitman **7** in the lower ball pin **14** and with the trapezoid wheel suspension interface **11** in the lower pin **15.**

Using the trapezoid wheel suspension interface **11** the whole of trapezoid wheel suspension **2** with the compact wheel unit **3** for small electric cars is firmly connected with the frame **4** of the transport electric platform.

The springing unit **10** consists of a damper **16** and spring **17** where the lower part of the dumper **16** is connected with the lower arm **9,** the upper part of the dumper **16** is laid in the trapezoid wheel **2** suspension interface **11**. The mechanism **5** of torsion stabilizer consists of torsion stabilizer **18,** laid in the frame **4** of the transport electric platform and a pair of the stabilizer arms **19** anchored in the lower arms **9.** The mechanism **6** of steering consists of a steering box **20** with moving element **21** of the steering box, electric drive **22** of the steering box and a pair of connecting racks **23** of steering, that through the head **24** of the rack tie on the pitman **7,** while the steering box **20** is firmly connected with the frame **4** of the transport electric platform.

The universal transport electric platform **25** is a result of compromise of modularity, universality, offered maneuverability and structural simplicity. This should result in a positive impact on the price accessibility of the device. The resulting price will also depend fundamentally on the chosen materials and related production technology.

The electric platform utilizes dimension variability. It is enabled by the fact that the designed trapezoid wheel suspension **2** is structurally solved as an independent module that can be simply attached to the basic frame of the platform. It can be produced in several sizes with respect to length and width, while the biggest variants can be structurally solved so that it is possible to make out of them six- or eight-wheel chassis (again with all wheels steered). The aim is then to create a logically justified set of chassis of different sizes that could be used for simple mounting a universal or single-purpose extension of corresponding size of the specific platform.

The drive in wheels ensures ideal traction and steering of all axles and advantageous maneuverability. The steering of the wheels is ensured by a classic variant with the steering box **20** (axle geometry is fixed) with the difference that the steering box **20** is electrically driven and thus between the control and action steering elements there is no mechanical link (corresponds to the standards "drive-by-wire"). Motion to the side or rotation on the spot are not possible using this system, however the maneuverability is even so very good and the structural complexity of the axle (wheel suspension) basically corresponds with the established standards of the automotive industry (it is quite common trapezoid axle).

### Description of the function of the universal transport electric platform

Electric drives of the compact wheel unit **3** for small electric cars laid in the trapezoid wheel suspensions **2** of the systems **1** of wheel suspension with the electric motor in the hubs are controlled using the modules **26** of the servo amplifiers based on the commands from the module **28** of the superior control system. The left and right wheels of the respective system **1** of wheel suspension with the electric motor in the hubs do not have any mechanical link with regard to traction, there is no differential gear. The required function of the differential gear stemming from the Ackermann principle is assured electronically using the respective module **26** of the servo amplifiers

All dashboard systems of the universal transport electric platform **25** are powered by the battery module **27** with its own electronics. Its condition and function is controlled and evaluated by the module **28** of the superior control system. The installed charging module **29** enables using the power module **30** connect the universal transport electric platform **25** to a common wall socket (with the voltage of 230 V, 16 A).

Using the anchoring points **31** of the extension located on the frame **4** of the transport electric platform it is possible to connect different types of extensions to the multi-purpose universal transport electric platform **25.** Thanks to using rubber silent blocks for the anchoring points **31** of the extensions a firm as well as flexible connection is assured. Control of all the functions of the universal transport electric platform **25** meets the definition of control without any mechanical link (drive-by-wire). The universal transport electric platform **25** is therefore suitable even for using as a remotely controlled or autonomous robot.

### Description of the function of the system of wheel suspension with the electric motor in the hub

The system **1** of wheel suspension with the electric motor in the hubs serves for accurate suspension and guidance of the compact wheel units **3** for small electric cars to the frame **4** of the transport electric platform, that can be in different size variants for the purpose of creating the universal transport electric platform **25** with the electric drives in the wheel hubs. The trapezoid suspension **2** of the wheel ensures the required geometry of the wheel guidance of the compact wheel unit **3** for small electric cars in the required wheel lift that is allowed by the operation range of the springing unit **10,** respectively by the lift length of the damper **16.** Forces in traction and braking of the compact wheel unit **3** for small electric cars are transferred onto the frame **4** of the transport electric platform through a pitman **7,** upper ball pin **12,** upper arm **8,** upper pin **13** and similarly also through lower ball pin **14,** lower arm **9,** lower pin **15** onto the trapezoid wheel suspension interface **11** that holds all the trapezoid suspension **2** of the wheel together and assures a firm connection of the trapezoid suspension **2** of the wheel with the frame **4** of the transport electric platform. Most of the affecting forces are transferred through more robust and longer lower arm **9** where there is in-built also the springing unit **10.** Both lower arm **9** and upper arm **8** must assure sufficient accuracy and rigidity of the axle, that is why the both the upper arm **8** and lower arm **9** have a triangular shape and their imposition in the interface **11** of the trapezoid wheel suspension in the upper pin **13** and lower pin **15** is double.

When going through a curve, centrifugal forces affect the whole car, that is even the system **1** of wheel suspension with the electric motor in the hubs. This results in undesirable side inclination of the vehicle and uneven load of the left and right trapezoid wheel suspension **2,** respectively their springing units **10,** which leads to their different compression (springing). Correction of the side inclination is supported by the mechanism **5** of torsion stabilizer that using the torsion stabilizer **18** swingingly laid in the frame **4** of the transport electric platform and to it connecting arms **19** of the stabilizer on both sides mutually connects the lower arms **9** of both left and right trapezoid wheel suspension 2. If due to the affecting centrifugal forces there is a natural different springing on the right and left trapezoid wheel suspension **2,** the torsion stabilizer **18** of the mechanism **5** of torsion stabilizer is exposed to twist. The force effect of the mechanism **5** of torsion stabilizer is opposite to the effect of centrifugal forces when going through a curve. This leads to the correction of the side inclination of the vehicle and the difference in compression (springing) of springing units **10** of both left and right trapezoid wheel suspension **2** is lower.

The trapezoid wheel suspension **2** generally enables using both non-steered and steered vehicle axles. The system **1** of wheel suspension with the electric motor in the hubs uses trapezoid wheel suspensions **2** complemented with steering mechanism **6.** The steering box **20** is equipped with an electric drive **22** of the steering box, that on the basis of the signals of the superior control unit assures the corresponding required linear motion of the movable element **21** of the steering box, connecting on both sides to connecting racks **23** of steering, which are movingly connected with the heads **24** of the racks of pitmans **7** of both trapezoid wheel suspensions **2** and this assures the defined turning of the wheel. The geometry of the steering mechanism **6** takes into consideration the required wheel convergency of one axle and the Ackermann principle.

The automated system **42** of side seat tilting with the advantage of the outside entry that consists of a telescopic base **54** with drives, the first arm **55,** second arm **56** and seat frame **57.**

The telescopic base **54** with drives consists of immobile part **58** of the telescopic base with the drives and movable part **59** of the telescopic base with the drives, while the immobile part **58** of the telescopic base with the drives consists of a profile 60 of immobile part of the telescopic base with the drives and to it there is attached the drive **61** of a vertical motion, followed by a satellite **62** of immobile part of the telescopic base with the drives revolvingly connected with the satellite bearing **63** with the profile of immobile part **60** of the telescopic base with the drives, while the movable part **59** of the telescopic base with the drives consists of a profile **64** of movable part of the telescopic base with the drives, equipped with the features **65** of the telescopic conduit, drive **66** of a horizontal motion and bearing **67** of the first arm. The first arm **55** consists of the body **68** of the first arm in which there is the bearing **69** of the second arm, pin **70** of the first arm with the driven **86** pulley of the second belt drive and tensioning mechanism **71** of the belt drive, consisting of the tension pulley 72 with a bearing, line **73** of the tension pulley, spring **74** of the tension pulley and tendon bolt **75** of the tension pulley, while the pin **76** of the first arm with the drive pulley **77** of the second belt drive **89** consists of the pin **89** of the first arm and the drive pulley **77** of the second belt drive **89** that is firmly connected with the pin **76** of the first arm. The second arm **56** consists of the body **78** of the second arm in which there is the bearing **79** of the seat frame, the hollow pin **80** of the second arm with the driven pulley **82** of the first belt drive **87** and tensioning mechanism **71** of the belt drive, while the hollow pin **80** of the second arm with the driven pulley **82** of the first belt drive **87** consists of the hollow pin **81** of the second arm on which there is firmly attached the driven pulley **82** of the first belt drive **87** and the supporting bearing **83** while the tensioning mechanism **71** of the belt drive is consists of the tension pulley **72** with a bearing, line **73** of the tension pulley, spring **74** of the tension pulley and tendon bolt **75** of the tension pulley. Seat frame **57** consists of the structure **84** of the seat frame to which it is firmly attached the pin **85** of the seat frame onto which it is attached the driven pulley **86** of the second belt drive **89.** Inside the first arm **55** of the automated system **42** of side seat tilting with the advantage of the outside entry there is the first belt drive **87** consisting of the belt **88** of the first belt drive **87,** profile **64** of movable part of the telescopic base with the drives and driven pulley **82** of the first belt drive **87** where inside the second arm **56** of the automated system **42** of side seat tilting with the advantage of the outside entry there is the second belt drive **89** consisting of the belt **90** of the second belt drive **89,** drive pulley **77** of the second belt drive **89** and driven pulley **86** of the second belt drive **89.**

### Description of the function of the automated system of side tilting

The automated system **42** of side seat tilting with the advantage of the outside entry serves for positioning of the seat **41** of the vehicle in two mutually perpendicular planes - horizontal and vertical (in the defined operating space) for the purpose of achieving easy getting in and out.

The automated system **42** of side seat tilting with the advantage of the outside entry is attached to the car floor using a flange of the profile **60** of immobile part of the telescopic base with the drives of the immobile part **58** of the telescopic base with the drives, which assures the fixed starting position of the seat **41** in the car.

The motion of the automated system **42** of side seat tilting with the advantage of the outside entry in the vertical plain (its height adjustment) is done using the telescopic base **54** with the drives, whose drive **61** of the vertical motion, firmly connected with the profile **60** of immobile part of the telescopic base with the drives, rotates the satellite **62** of immobile part of the telescopic base with the drives, which is on its external diameter equipped with a thread fitting in the internal thread of the profile **64** of movable part of the telescopic base with the drives of movable part **59** of the telescopic base with the drives. The profile **64** of movable part of the telescopic base with the drives is connected with the profile **60** of immobile part of the telescopic base with the drives through a feature **65** of the telescopic conduit, enabling sliding motion in the vertical direction of the movable part **59** of the telescopic base with the drives against the immobile part **58** of the telescopic base with the drives. The sliding motion results from the mechanism of a motion bolt between the profile **64** of movable part of the telescopic base with the drives and satellite **62** of immobile part of the telescopic base with the drives, that is driven by the drive **61** of the vertical motion and laid on the satellite bearing **63** that prevents from the vertical motion of the satellite **62** of immobile part of the telescopic base with the drives. The vertical motion of the automated system **42** of side seat tilting with the advantage of the outside entry serves for setting the ideal height of the seat **41,** or seat frame **57** in the starting position in the vehicle and at the same time for minimizing the height of the seat **41,** or seat frame **57** in the position for getting in and out.

The motion of the automated system **42** of side seat tilting with the advantage of the outside entry in the horizontal plane is realized on the basis of mutually accurately defined mechanical connection of the telescopic base **54** with the drives of the first **55** arm, second **56** arm and the seat frame **57** by the first **87** belt drive and second **89** belt drive, while the first **55** arm is driven by the drive **66** of the horizontal motion. The drive **66** of the horizontal motion is firmly connected with the profile **64** of movable part of the telescopic base with the drives of movable part **59** of the telescopic base with the drives of the telescopic base **54** with the drives and rotates the body of the first **55** arm that is on the movable part **59** of the telescopic base with the drives revolvingly laid in the bearing **67** of the first arm. In the inner hollow of the body **68** of the first arm at the first **55** arm there is a belt **88** of the first belt drive at the first belt drive **87** connecting the profile **64** of movable part of the telescopic base with the drives with the driven pulley **82** of the first belt drive firmly connected with a hollow pin **81** of the second arm that are part of the hollow pin **80** of the second arm with the driven pulley **86** of the first belt drive **87** firmly connected with the body **78** of the second arm at the second arm **56** and revolvingly laid in the bearing **69** of the second arm. The motion of the second arm **56** directly depends on the motion of the first arm **55,** while the parameters of this dependency are decided by the gear ratio of the first **87** belt drive that results from the selected kinematics of the automated system **42** of side seat tilting with the advantage of the outside entry, depending on the specific required seat position **41,** or seat frame **57** for getting in and out.

In the inner hollow of the body **78** of the second arm at the second **56** arm there is the belt **90** of the second belt drive at the second **89** belt drive connecting the drive pulley **77** of the second belt drive located on the pin **76** of the first arm at the pin **70** of the first arm with the drive pulley of the second belt drive that is firmly connected to the body **68** of the first **55** arm and goes through the hollow pin **80** of the second arm with the driven pulley **86** of the second belt drive, that is fastened on the pin **85** of the seat frame that is firmly connected with the structure **84** of seat frame at the seat frame **57.** The motion of the seat **41,** or seat frame **57** directly depends on the motion of the first **55** arm or from it resulting motion of the second **56** arm, while the parameters of this dependency are decided by the gear ratio of the first **87** belt drive and the second **89** belt drive that results from the selected kinematics of the automated system **42** of side seat tilting with the advantage of the outside entry, depending on the specific required seat position **41,** or seat frame **57** for getting in and out.

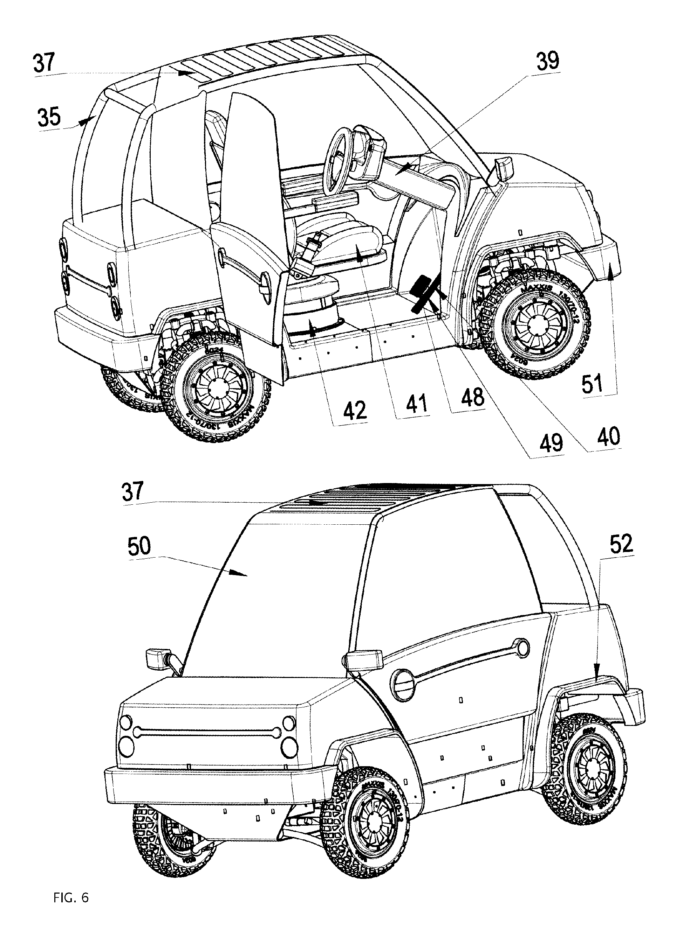

On figure 6 there is the universal transport electric platform **25** with two-seat extension **32** with the cargo space **34,** consisting of the cabin space **33** for the crew, cargo space **34,** extension frame **35,** parts of the body **36,** glassed-in cabin space, pair of doors and photovoltaic roof panel **37,** while the two-set extension **32** with the cargo space has outside front lights and rear lights.

The cabin space **33** for the crew is equipped with a dashboard with multi-functional display **38** with a touch screen, telescopically extensible **39** control module, pedal module **40** and seats **41,** attached onto the automated systems **42** of side seat tilting with the advantage of the outside entry. The telescopically extensible **39** control module consists of a steering wheel **43,** traffic indicator lever and the instrument shield **44** with the speedometer **45,** left display **46** and right display **47.** The pedal module **40** consists of a brake pedal **48** and accelerator pedal **49.**

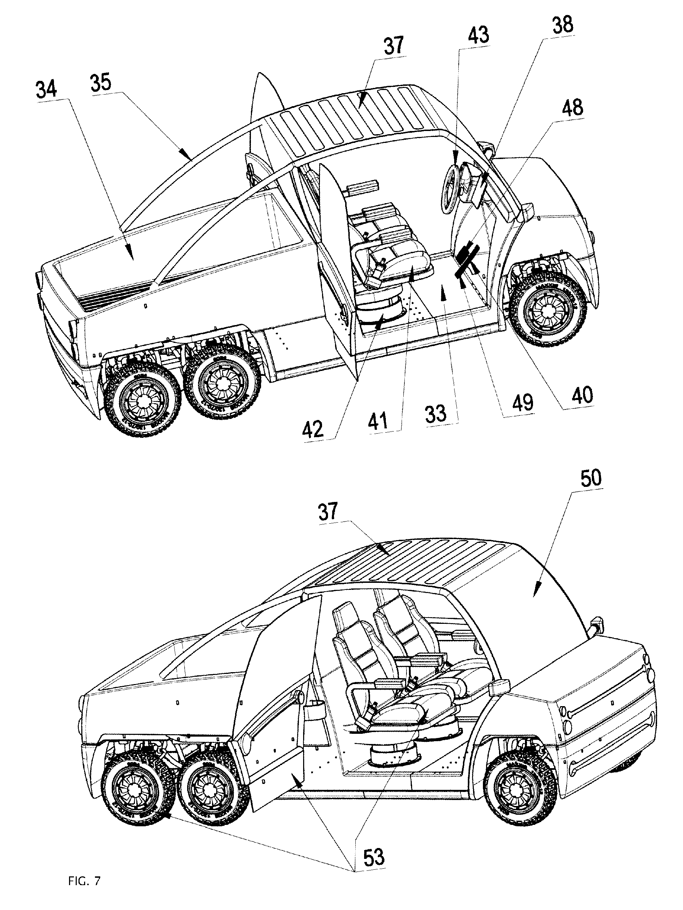

Another variant of the two-seat extension is e.g. a six-wheel two-seat extension **53** with the cargo space on figure 7.

### Description of the function of the universal transport electric platform with the two-seat extension with the cargo space

The two-seat extension with the cargo space **32** offers in the cabin space **33** for the crew enough of space for two adult persons. For this purpose there is the pair of seats **41** that are fastened on the automated systems **42** of side seat tilting with the advantage of the outside entry, assuring comfortable entry to the cabin space **33** for the crew even to persons with a reduced mobility. The automated system **42** of side seat tilting with the advantage of the outside entry can tilt the seat **41** from the starting position by 90° and extend outside to the space of the respective side door that can be opened wide. Except that the automated system **42** of side seat tilting with the advantage of the outside entry allows to set the height of the seat **41.** The border edge of the seat **41** in the position of the automated system **42** of side seat tilting with the advantage of the outside entry for getting in/out exceeds the size of the universal transport electric platform **25** and makes getting in/out very comfortable. Moreover, it is possible to lower the height of the seat **41** in this position. When getting in/out the extensible control module **39** is telescopically moved as close as possible to the dashboard so that the steering wheel **43** does not prevent the automated system **42** of side seat tilting with the advantage of the outside entry with the seat **41** in motion.

The basis of the working place of the driver is the telescopically extensible control module **39** whose distance from the seat **41** in the operating position can be adjusted upon the driver's requirements. The driver turns with the steering wheel **43** and its current position is evaluated by the module **28** of the superior control system that controls the electric drive **22** of the steering box at the steering box **20** of the system **1** of wheel suspension with the electric motor in the hubs of the universal transport electric platform **25.** Using the traffic indicator lever it is possible to activate the traffic indicators and all other functions of the front and rear lights. The driver controls the speed and braking using the pedal module **40.** The acceleration is controlled using the accelerator pedal **49,** slowing using the brake pedal **48.** When stepping on the brake pedal **48** mildly, the braking effect is assured by the electric motor of the compact wheel unit **3** for small electric cars; if the brake pedal **48** is applied so strongly that the corresponding braking effect exceeds the maximum braking moment of the electric motor of the compact wheel unit **3** for small electric cars, the braking is supported also by the disk brake of the compact wheel unit **3** for small electric cars.

The speed is shown on the speedometer **45** of the instrument shield **44** of telescopically extensible control module **39,** on the left display **46** and right display **47** of the instrument shield **44** all the remaining operation pieces of information are shown. The multifunctional display with the touch screen **38,** e.g. tablet, on the dashboard can serve for example for showing the navigation etc.

The cabin space roof **33** for the crew of the two-seat extension **32** with the cargo space is equipped with the photovoltaic roof panel **37** that serves for charging of the battery module **27** of the universal transport electric platform **25.** The process of charging the battery module **27** from the photovoltaic roof panel **37** is controlled by the electronics of the battery module **27** and the module **28** of the superior control system of the universal transport electric platform **25.**

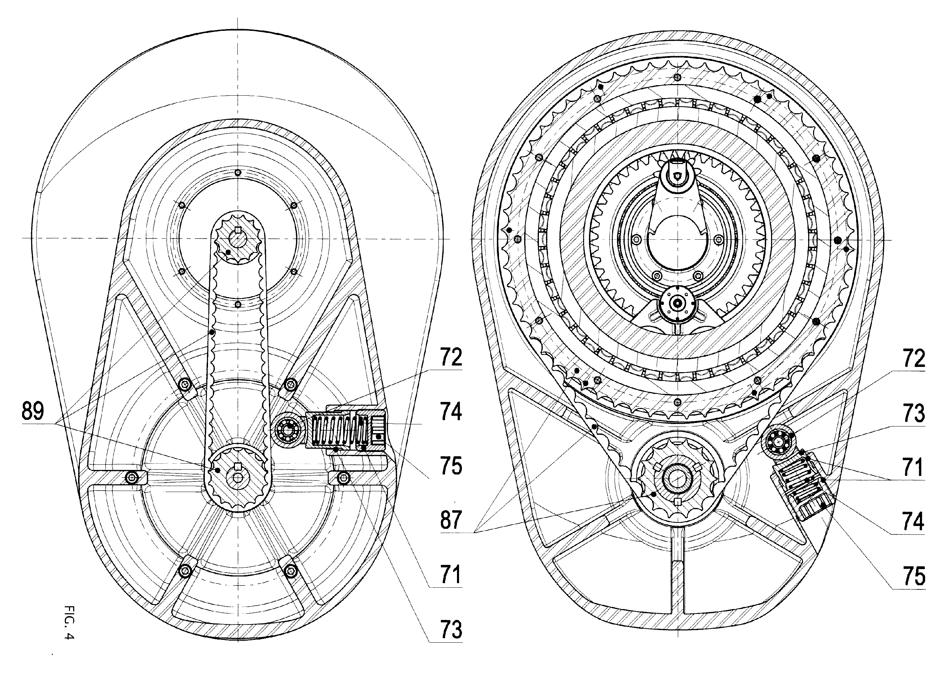

On fig. 4. there is the je universal transport electric platform **25** equipped with the one-seat off-road extension **50,** consisting of the extension frame **35,** body **36** parts, glassed-in cabin space, pair of doors and photovoltaic roof panel **37,** while the one-seat off-road extension **50** has also outside front lights and rear lights, while one-seat off-road extension **50** is equipped with the dashboard, telescopically extensible control module **39,** pedal module **40** and seats **41,** attached onto the automated system **42** of side seat tilting with the advantage of the outside entry, where the telescopically extensible control module **39** consists of a steering wheel **43,** traffic indicator lever and the instrument shield **44** with the speedometer **45,** left display 46 and right display 47**.**

The pedal module **40** consists of a brake pedal **48** and accelerator pedal **49.** The one-seat off-road extension **50** is equipped for driving off roads with off-road bumpers **51** and off-road mudguards **52.**

### Description of the function of the universal transport electric platform with one-seat off-road extension

The one-seat off-road extension **50** offers enough of space and comfort for one passenger - driver. For this purpose there is the centrally located seat **41** that is attached onto the automated system **42** of side seat tilting with the advantage of the outside entry, assuring comfortable entry even to persons with a reduced mobility. The automated system **42** of side seat tilting with the advantage of the outside entry can tilt the seat **41** from the starting position by 90° and extend outside to the space of the left or right doors that can be opened wide. Except that the automated system **42** of side seat tilting with the advantage of the outside entry allows to set the height of the seat **41.** The border edge of the seat **41** in the position of the automated system **42** of side seat tilting with the advantage of the outside entry for getting in/out exceeds the size of the universal transport electric platform **25** and makes getting in/out very comfortable. Moreover, it is possible to lower the height of the seat **41** in this position. When getting in/out the extensible control module **39** is telescopically moved as close as possible to the dashboard so that the steering wheel **43** does not prevent the automated system **42** of side seat tilting with the advantage of the outside entry with the seat **41** in motion.

The basis of the working place of the driver is the telescopically extensible control module **39** whose distance from the seat **41** in the operating position can be adjusted upon the driver's requirements. The driver turns with the steering wheel **43** and its current position is evaluated by the module **28** of the superior control system that controls the electric drive **22** of the steering box at the steering box **20** of the system **1** of wheel suspension with the electric motor in the hubs of the universal transport electric platform **25.** Using the traffic indicator lever it is possible to activate the traffic indicators and all other functions of the front and rear lights. The driver controls the speed and braking using the pedal module **40.** The acceleration is controlled using the accelerator pedal **49,** slowing using the brake pedal **48.** When stepping on the brake pedal **48** mildly, the braking effect is assured by the electric motor of the compact wheel unit **3** for small electric cars; if the brake pedal **48** is applied so strongly that the corresponding braking effect exceeds the maximum braking moment of the electric motor of the compact wheel unit **3** for small electric cars, the braking is supported also by the disk brake of the compact wheel unit **3** for small electric cars.

The speed is shown on the speedometer **45** of the instrument shield **44** of telescopically extensible control module **39,** on the left display **46** and right display **47** of the instrument shield **44** all the remaining operation pieces of information are shown.

The roof **50** of the one-seat extension is equipped with the photovoltaic roof panel **37** that serves for charging of the battery module **27** of the universal transport electric platform **25.** The process of charging the battery module **27** from the photovoltaic roof panel **37** is controlled by the electronics of the battery module **27** and the module **28** of the superior control system of the universal transport electric platform **25.**

The one-seat off-road extension **50** is both in the front and in the back equipped for driving off roads with off-road bumpers **51** of which the design and shape endures driving in a more rough terrain. The shape of the off-road bumpers **51** also improves the front and back ramp angle of the universal transport electric platform **25.** Similarly, the increased clearance height of the chassis improves the trafficability of the universal transport electric platform **25.** The off-road bumpers **52** reflect the need of a bigger springing of the wheels of the trapezoid wheel suspensions **2** of the systems **1** of wheel suspension with the electric motor in the hubs of the universal transport electric platform 25.

### Industrial Use

The system is universal and can be used both as a whole and partially. It can be applied especially in the transportation and robotics, in a wide range of areas including health system. For example, it enables building, in a prefabricated manner, a wide range of alternatives of means of transportation with the electric drives. Also it can be used for means of transportation for municipal purposes, alternatives of extensions of passenger transport including the transport of the disabled persons and alternatives of extensions for the sports purposes.

### List of the Related Tags:

1) System of wheel suspension with the electric motor in the hubs
2) Trapezoid wheel suspension
3) Compact wheel unit
4) Frame of the transport electric platform
5) Mechanism of torsion stabilizer
6) Mechanism of steering
7) Pitman
8) Upper arm
9) Lower arm
10) Springing unit
11) Trapezoid wheel suspension interface
12) Upper ball pin
13) Upper pin
14) Lower ball pin
15) Lower pin
16) Damper
17) Sprig
18) Torsion stabilizer
19) Stabilizer arm
20) Steering box
21) Moving element of the steering box
22) Electric drive of the steering box
23) Connecting rack of steering
24) Head of the rack
25) Universal transport electric platform
26) Module of servo amplifier
27) Battery module
28) Module of the superior control system
29) Charging module
30) Power module
31) Extension anchoring points
32) Two-seat extension with the cargo space
33) Crew space
34) Cargo space
35) Extension frame
36) Body parts
37) Photovoltaic roof panel
38) Multifunctional display with the touch screen (tablet)
39) Telescopically extensible control module
40) Pedal module
41) Seat
42) Automated system of side seat tilting with the advantage of the outside entry
43) Steering wheel
44) Instrument shield
45) Speedometer
46) Left display
47) Right display
48) Brake pedal
49) Accelerator pedal
50) One-seat off-road extension
51) Off-road bumper
52) Off-road mudguard
53) Six-wheel two-seat extension with the cargo space
54) Telescopic base with the drives
55) First arm
56) Second arm
57) Seat frame
58) Immobile part of the telescopic base with the drives
59) Movable part of the telescopic base with the drives
60) Profile of immobile part of the telescopic base with the drives
61) Drive of the vertical motion
62) Satellite of immobile part of the telescopic base with the drives
63) Satellite bearing
64) Profile of movable part of the telescopic base with the drives
65) Feature of the telescopic conduit
66) Drive of the horizontal motion
67) Bearing of the first arm
68) Body of the first arm
69) Bearing of the second arm
70) Pin of the first arm with the drive pulley of the second belt drive
71) Tensioning mechanism of the belt drive
72) Tension pulley with a bearing
73) Line of the tension pulley
74) Spring of the tension pulley
75) Tendon bolt of the tension pulley
76) Pin of the first arm
77) Drive pulley of the second belt drive
78) Body of the second arm
79) Bearing of the seat frame
80) Hollow pin of the second arm with the driven pulley of the first belt drive
81) Hollow pin of the second arm
82) Driven pulley of the first belt drive
83) Supporting bearing
84) Structure of the seat frame
85) Pin of the seat frame
86) Driven pulley of the second belt drive
87) First belt drive
88) Belt of the first belt drive
89) Second belt drive
90) Belt of the second belt drive

## Claims

1. The automated system **(42)** of side seat tilting with the advantage of the outside entry that consists of a telescopic base **(54)** with drives, the first arm **(55),** second arm **(56)** and seat frame **(57) characteristic by the following:**
the telescopic base **(54)** with drives consists of immobile part **(58)** of the telescopic base with the drives and movable part **(59)** of the telescopic base with the drives, while the immobile part **(58)** of the telescopic base with the drives consists of a profile **(60)** of immobile part of the telescopic base with the drives and to it there is attached the drive **(61)** of a vertical motion, followed by a satellite **(62)** of immobile part of the telescopic base with the drives revolvingly connected with the satellite bearing **(63)** with the profile **(60)** of immobile part of the telescopic base with the drives, while the movable part **(59)** of the telescopic base with the drives consists of a profile **(64)** of movable part of the telescopic base with the drives, equipped with the features **(65)** of the telescopic conduit, drive **(66)** of a horizontal motion and bearing **(67)** of the first arm,
while the first arm **(55)** consists of the body **(68)** of the first arm in which there is the bearing **(69)** of the second arm, pin **(70)** of the first arm with the drive pulley of the second belt drive and tensioning mechanism **(71)** of the belt drive, while the pin **(70)** of the first arm with the drive pulley of the second belt drive consists of the pin **(76)** of the first arm and the drive pulley **(77)** of the second belt drive that is firmly connected with the pin **(76)** of the first arm, while the second arm **(56)** consists of the body **(78)** of the second arm in which there is the bearing **(79)** of the seat frame, the hollow pin **(80)** of the second arm with the driven pulley of the first belt drive and tensioning mechanism **(71)** of the belt drive, while the hollow pin **(80)** of the second arm with the driven pulley of the first belt drive consists of the hollow pin **(81)** of the second arm on which there is firmly attached the driven pulley **(82)** of the first belt drive and the supporting bearing **(83).**
while seat frame **(57)** consists of the structure **(84)** of the seat frame to which it is firmly attached the pin **(85)** of the seat frame onto which it is attached the driven pulley **(86)** of the second belt drive,
while inside the first arm **(55)** of the automated system **(42)** of side seat tilting with the advantage of the outside entry there is the first belt drive **(87)** consisting of the belt **(88)** of the first belt drive, profile **(64)** of movable part of the telescopic base with the drives and driven pulley **(82)** of the first belt drive where inside the second arm **(56)** of the automated system **(42)** of side seat tilting with the advantage of the outside entry there is the second belt drive **(89)** consisting of the belt **(90)** of the second belt drive, drive pulley **(77)** of the second belt drive and driven pulley **(86)** of the second belt drive.

2. The universal transport electric platform **(25)** with the electric drives in the wheel hubs equipped with the automated system **(42)** of side seat tilting with the advantage of the outside entry consists of a frame **(4)** of the transport electric platform and there are firmly attached to it at least two systems **(1)** of wheel suspensions with the electric motor in the hubs and there are also attached the modules **(26)** of servo amplifiers, battery module **(27),** module **(28)** of the superior control system, charging module **(29)** and power module **(30), characteristic by the following:**
the system **(1)** of wheel suspension with the electric motor in the hubs consists of a trapezoid wheel suspension **(2),** compact wheel unit **(3),** frame **(4)** of a transport electric platform, mechanism **(5)** of torsion stabilizer and furthermore a mechanism **(6)** of steering, while the trapezoid wheel suspension **(2)** consists of pitman (7), upper arm **(8),** lower arm **(9),** springing unit **(10)** and trapezoid wheel suspension interface **(11).**
while the upper arm **(8)** is connected with the pitman **(7)** in the upper ball pin **(12)** and with the trapezoid wheel suspension interface **(11)** in the upper pin **(13),** while the lower arm **(9)** is connected with the pitman **(7)** in the lower ball pin **(14)** and with the trapezoid wheel suspension interface **(11)** in the lower pin **(15).**
while using the trapezoid wheel suspension interface **(11)** the whole of trapezoid wheel suspension **(2)** with the compact wheel unit **(3)** is firmly connected with the frame **(4)** of the transport electric platform,
while the mechanism **(5)** of torsion stabilizer consists of torsion stabilizer **(18)** laid in the frame **(4)** of the transport electric platform and a pair of the stabilizer arms **(19)** anchored in the lower arms **(8),**
while the mechanism **(6)** of steering consists of a steering box **(20)** with moving element **(21)** of the steering box, electric drive **(22)** of the steering box and a system of connecting racks **(23)** that through the head **(24)** of the rack tie on the pitman **(7),** while the steering box **(20)** is firmly connected with the frame **(4)** of the transport electric platform.

3. The universal transport electric platform **(25)** based on the requirement 2, **characteristic by the following:**
as part of the springing unit **(10)** there is the damper **(16)** together with the spring (17).

4. The universal transport electric platform **(25)** based on the requirement 2, **characteristic by the following:**
on the frame **(4)** of the transport electric platform it is equipped with the anchoring points **(31)** of the extension for connecting different sorts of extensions.

5. The automated system **(42)** of side seat tilting with the advantage of the outside entry based on the requirement 1, **characteristic by the following:**
the tensioning mechanism of the belt drive **(71)** is the mechanism of tension pulley consisting of the tension pulley **(72)** with a bearing, line **(73)** of the tension pulley, spring **(74)** of the tension pulley and tendon bolt **(75)** of the tension pulley.

6. The universal transport electric platform **(25)** based on the requirement 2, **characteristic by the following:** the utility extension is a two-seat extension **(32)** with the cargo space consisting of the cabin space **(33)** for the crew, cargo space **(34),** extension frame **(35),** parts of the body **(36),** glassed-in cabin space, doors and photovoltaic roof panel **(37).**

7. The universal transport electric platform **(25)** based on the requirement 2, **characteristic by the following:** the utility extension is a one-seat off-road extension **(50)** consisting of the frame **(35),** extension, parts of the body **(36),** glassed-in cabin space, doors and photovoltaic roof panel **(37)** while from the outside the one-seat off-road extension **(50)** is equipped for driving off roads with off-road bumpers **(51)** and off-road mudguards **(52).**

8. The universal transport electric platform **(25)** based on the requirement 2, **characteristic by the following:**
the utility extension is a six-wheel two-seat extension **53** with the cargo space.

9. The universal transport electric platform **(25)** based on the requirement 2 and 6 - 8, **characteristic by the following:**
the extension je equipped with a dashboard with multi-functional display **(38)** with a touch screen, telescopically extensible control module **(39),** pedal module **(40)** and seats **(41),** attached onto the automated system **(42)** of side seat tilting with the advantage of the outside entry.

10. The universal transport electric platform **(25)** based on the requirement 9, **characteristic by the following:**
the telescopically extensible control module **(39)** consists of a steering wheel **(43),** traffic indicator lever and the instrument shield **(44)** with the speedometer **(45),** left display **(46)** and right display **(47),** while the pedal module **(40)** consists of a brake pedal **(48)** and accelerator pedal **(49).**
